# EUROPEAN PATENT APPLICATION

(11) **EP 2 587 762 A1**
(43) Date of publication of application: **01.05.2013**
(21) Application number: 12006967.9
(22) Date of filing: 08.10.2012
(51) Int. Cl.: H04L 29/08, G06Q 10/10, H04W 4/20

(54) **Social device resource management**

(30) Priority: 08.10.2011 US 201161545147 P; 29.02.2012 US 201213408986
(71) Applicant: Broadcom Corporation, Irvine, CA 92617 (US)
(72) Inventor: Rajakarunanayake, Yasantha, 94582 San Ramon CA (US); Bennett, James, 36301 Hroznetin (CZ); Karaoguz, Jeyhan, 92606 Irvine CA (US); Chen, Sherman, 92067 Rancho Santa Fe CA (US); Tyson, Harry, 78746 Austin TX (US)
(74) Representative: Jehle, Volker Armin

(57) **Abstract**

A method and apparatus for allocating resources in a social network. In one embodiment, access to resources of a social network and participant social devices is managed through general or member class-specific access rights. Such access rights may also be established for authorized guests or non-members of the social network. In further embodiments, social resources may be offered and (re)allocated in a dynamic manner through real time usage and availability analysis.

## Description

### CROSS REFERENCE TO RELATED PATENTS/PATENT APPLICATIONS

### Provisional Priority Claim

The present U.S. Utility Patent Application claims priority pursuant to 35 U.S.C. § 119(e) to the following U.S. Provisional Patent Application which is hereby incorporated herein by reference in its entirety and made part of the present U.S. Utility Patent Application for all purposes:
1. U.S. Provisional Patent Application Serial No. 61/545,147, entitled "Social Network Device Memberships and Resource Allocation," (Attorney Docket No. BP23771), filed 10-08-2011, pending.

### Incorporation by Reference

The following U.S. Utility Patent Applications are hereby incorporated herein by reference in their entirety and made part of the present U.S. Utility Patent Application for all purposes:
1. U.S. Utility Patent Application Serial No. _________, entitled "Social Device Anonymity Via Full, Content Only, and Functionality Access Views," (Attorney Docket No. BP23776.1), filed on the same date herewith, pending, which claims priority pursuant to 35 U.S.C. § 119(e) to the following U.S. Provisional Patent Application which is hereby incorporated herein by reference in its entirety and made part of the present U.S. Utility Patent Application for all purposes:
   1.1. U.S. Provisional Patent Application Serial No. 61/545,147, entitled "Social Network Device Memberships and Resource Allocation," (Attorney Docket No. BP23771), filed 10-08-2011, pending.

### BACKGROUND OF THE INVENTION

### TECHNICAL FIELD OF THE INVENTION

The invention relates generally to social networking; and, more particularly, it relates to social network device/node resource management, allocation and arbitration.

### DESCRIPTION OF RELATED ART

The popularity and growth of social network sites and services has increased dramatically over the last few years. Present social network sites include Facebook, Google+, Twitter, MySpace, YouTube, LinkedIn, Flicker, Jaiku, MYUBO, Bebo and the like. Such social networking (SNET) sites are typically web-based and organized around user profiles and/or collections of content accessible by members of the network. Membership in such social networks is comprised of individuals, or groupings of individuals, who are generally represented by profile pages and permitted to interact as determined by the social networking service.

In many popular social networks, especially profile-focused social networks, activity centers on web pages or social spaces that enable members to view profiles, communicate and share activities, interests, opinions, status updates, audio/video content, etc., across networks of contacts. Social networking services might also allow members to track certain activities of other members of the social network, collaborate, locate and connect with existing friends, former acquaintances and colleagues, and establish new connections with other members.

Individual members typically connect to social networking services through existing web-based platforms via a computing device, tablet or smartphone. Members often share a common bond, social status, or geographic or cultural connection with their respective contacts. Smartphone and games-based mobile social networking services are examples of rapidly developing areas.

In so-called "cloud" computing, computing tasks are performed on remote computers/servers which are typically accessed via Internet connections. One benefit of cloud computing is that may reduce the relative processing and storage capabilities required by user devices (e.g., a cloud computer may load a webpage accessed by a tablet device and communicate only required information back to the tablet). Accordingly, recent years have witnessed an ever-growing amount of content and application software being migrated from local or on-site storage to cloud-based data storage and management. Such software functionality/services and content are typically available on-demand via (virtualized) network infrastructures.

### BRIEF SUMMARY OF THE INVENTION

According to an aspect, a method is provided for allocating resources in a social network circle having an associated membership including at least one social device, the social device having a social device resource capable of being shared with at least a second member of the social network circle, the method comprising:
establishing access rights for the at least one social device resource;
identifying a request, from the second member of the social network circle, for access to the at least one social device resource; and
in response to the request, permitting access to the at least one social device resource in accordance with the access rights.

Advantageously, the second member of the social network circle is a human member.

Advantageously, establishing access rights for the at least one social device resource comprises establishing a plurality of levels of access rights, and wherein permitting access to the at least one social device resource comprises selecting one of the plurality of levels of access rights.

Advantageously, selecting one of the plurality of levels of access rights is based, at least in part, upon profile information associated with the second member of the social network circle.

Advantageously, the method further comprises:
identifying a second request for access to the at least one social device resource by a third member of the social network circle or an authorized non-member of the social network circle;
establishing the relative priority of the first and second requests; and
responding to the relatively lower priority request by permitting constrained access to the social resource.

Advantageously, constrained access to the at least one social device resource comprises suspension of access pending resolution of the higher priority request for access to the at least one social device resource.

Advantageously, the social network circle supported by a social network infrastructure having resource management functionality, wherein permitting access to the at least one social device resource is performed by the resource management functionality.

Advantageously, the at least one social device resource selected from the group consisting of:
social device user profile information;
social device configuration information;
social device status information;
social media content; and
social device data.

Advantageously, the at least one social device resource selected from the group consisting of:
processing capabilities;
allocable communication bandwidth;
storage resources accessible via the social device;
services; and
attached device resources.

Advantageously, the access rights are established, at least in part, via a user interface associated with the at least one social device resource.

Advantageously, the at least one social device resource comprising a first social device resource and a second social device resource, and wherein establishing access rights further comprises establishing distinct access rights for the first social device resource and the second social device resource.

According to an aspect, a device circuitry is provided used to interact with a social network system, the social network system hosting a social circle, the device circuitry comprising:
interface circuitry operable to couple with the social network system;
processing circuitry coupled with the interface circuitry to support secure interaction with a social resource associated with the social network system; and
the secure interaction comprising interaction regarding social circle membership and social device resource access rights.

Advantageously, the processing circuitry further operable to support sharing of a social resource offered via the social circle, the sharing in accordance with the social device resource access rights.

Advantageously, support for sharing of a social resource comprises arbitration of requests for access to the social resource.

Advantageously, the social device resource access rights comprises at least a first level of access rights and a second level of access rights.

Advantageously, the first level of access rights applicable to specified members of the social circle, the second level of access rights applicable to non-members of the social circle.

According to an aspect, a method is provided for exercising control of a social device docked in a social network circle having at least one human or non-device member, the social device configured to receive and process control signals from other nodes in the social network, the method comprising:
conferring operational control of a resource of the social device to a node of the social network;
generating, by the node of the social network, contextually appropriate control signals relating to the resource of the social device; and
communicating the control signals to the social device, the resource of the social device performing a function in response to the control signals.

Advantageously, the function comprises downloading application software.

Advantageously, the function comprises downloading data relating to operations of the social network circle.

Advantageously, the step of communicating the control signals to the social device performed in accordance with a social network communication protocol.

### BRIEF DESCRIPTION OF THE SEVERAL VIEWS OF THE DRAWINGS

**FIG. 1** illustrates an embodiment of a social network group comprising social devices in accordance with the invention.
**FIG. 2** illustrates an embodiment of a social group comprising a variety of members in accordance with the present invention.
**FIG. 3** is a functional block diagram illustrating a social network infrastructure and social devices in accordance with an embodiment of the invention.
**FIG. 4** is a schematic block diagram of a social device operable to support various resource access interactions with other social devices and social systems in accordance with an embodiment of the invention.
**FIG. 5** is a functional block diagram of a social network hosting system in accordance with an embodiment of the invention.
**FIG. 6** is a schematic block diagram illustrating access to social resources of a social network circle/sub-circle in accordance with the present invention.
**FIG. 7** is a schematic block diagram of an embodiment of a social device comprising integral resource access and allocation management functionality in accordance with an embodiment of the present invention.
**FIG. 8** is a logic diagram of an embodiment of a method for allocating social resources in accordance with the present invention.
**FIG. 9** is a logic diagram of an embodiment of a method for establishing tiered views of and access to social resources in accordance with the present invention.
**FIG. 10** is a logic diagram of an embodiment of a method for arbitrated access to social resources in accordance with the present invention.
**FIG. 11** is a schematic block diagram illustrating social resource allocation and arbitration functionality in accordance with an embodiment of the present invention.
**FIG. 12** is a schematic block diagram illustrating various access views for social device resources in accordance with an embodiment of the present invention.
**FIG. 13** is a schematic block diagram of an embodiment of a social device/server incorporating communication and control protocol capabilities in accordance with the present invention.
**FIG. 14** is a logic diagram of an embodiment of a method for controlling operation of a social device in accordance with the present invention.
**FIG. 15** illustrates various embodiments of social device membership and access in social network circles/sub-circles in accordance with the invention.
**FIG. 16** is a schematic block diagram illustrating remote access to social resources of a social network circle/sub-circle in accordance with the present invention.
**FIG. 17** is a state diagram depicting social device docking and remote resource access in accordance with an embodiment of the present invention.
**FIG. 18** is a schematic block diagram of an embodiment of a social device comprising integral functionality operable to support social network circle/sub-circle membership and communications in accordance with the invention.

### DETAILED DESCRIPTION OF THE INVENTION

As used herein, the terms "social network" and "SNET" comprise a grouping or social structure of devices and/or individuals, as well as connections, links and interdependencies between such devices and/or individuals. Members or actors (including devices) within or affiliated with a SNET may be referred to herein as "nodes", "social devices", "SNET members", "SNET devices", "user devices" and/or "modules". In addition, the terms "SNET circle", "SNET group" and "SNET sub-circle" generally denote a social network that comprises social devices and, as contextually appropriate, human SNET members and personal area networks ("PANs").

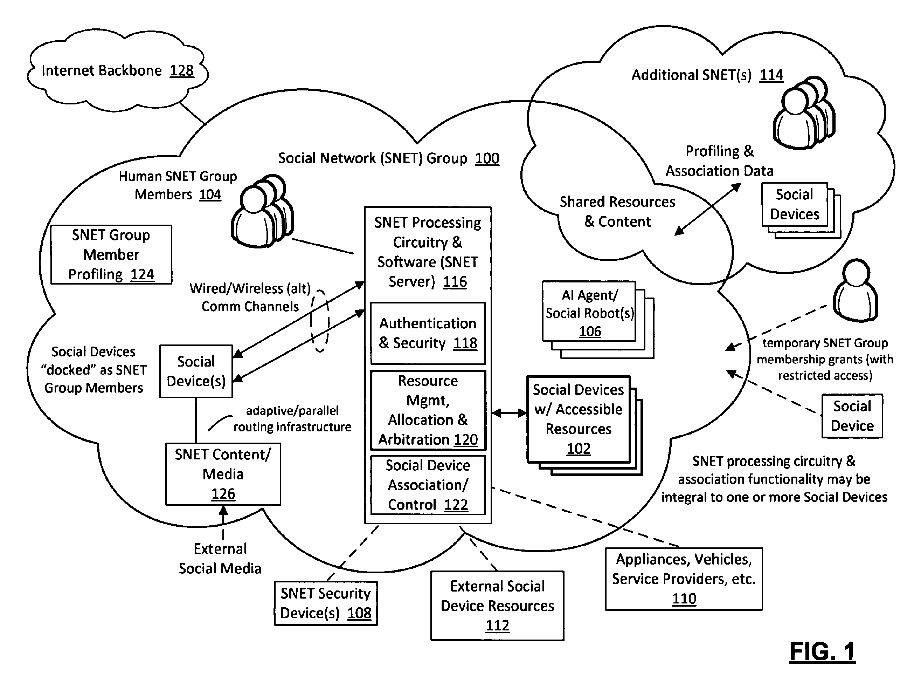

Referring now to **FIG. 1****,** a social network circle/group 100 (hereinafter "SNET circle" nor "SNET group") comprising social devices with 102 is shown. Beyond traditional social networking features and services, a SNET group 100 and associated social devices 102 according to various embodiments of the invention include numerous novel features and attributes as described more fully below with general reference to the illustration.

Briefly, membership in the SNET group 100 may comprise docked social devices 102 with resources that are accessible to other members of the SNET group 100 and human SNET group members 104, as well as proxies thereof. Further, SNET group 100 nodes may include device services and software (e.g., applications) of various types participating as members. By way of example, SNET group members might include artificial intelligence agents/social robots 106, SNET security device(s) 108, appliances, vehicles and service providers 110, common or authorized members/functionality of other SNET groups 112, etc. Further, access to specific content and resources of a SNET group 100 may be shared with members of additional SNET(s) 114, including remote or web-based applications. Such access can be conditioned on acceptable profiling and association data. Similarly, social devices or individuals may be granted temporary or ad hoc memberships, with or without restricted access.

In the illustrated embodiment, formation, maintenance and operation of SNET group 100 is performed by standalone or distributed SNET processing circuitry and software 116. It is noted that the "SNET processing circuitry" may comprise hardware, software, applications, or various combinations thereof, and be configurable to support various functionalities disclosed herein. Further, the SNET processing circuitry 116 may be included in a standalone server, server farm, cloud-based resources, and/or the various types of devices described below, and incorporate authentication and security functionality 118. In addition, specialized middleware may also be utilized by SNETs according to the invention, including standardized middleware (or standardized communication protocols) with an associated certification process. Interactions and interdependencies within the SNET group 100 may involve one or more of an adaptive resource management, allocation and arbitration module 120, a social device association/control module 122, and a SNET group member profiling module 124 as described more fully below.

Distribution of internal and external SNET content/media 126 can be accomplished in a variety of ways in accordance with various embodiments of the invention. For example, media distribution may involve an adaptive or parallel network routing infrastructure involving a wide variety of communication protocols and wired and/or wireless communications channels. SNET content/media 126 may comprise, for example, various user-driven (advertising) channels, pictures, videos, links, online text, etc. Access to such content, as well as communications with and remote access to social devices 102 of the SNET group 100, may occur over an Internet backbone 128, cellular communication system, WAN, LAN, etc.

A member of a SNET in accordance with various embodiments of the invention such as those disclosed herein may establish permissions and/or privacy settings that control and restrict who or what may access the member's profile(s) information, connections and groups, as well as define desired degrees of access. Permissions may enable the user to maintain certain information as private or available on a permissive basis only. For example, visibility of specified user information may be limited to users/devices in a SNET(s). Alternatively, specified user information may be publicly available. Likewise, a SNET member may selectively decide to permit others to access personal information such as name, gender, contact information/email address, etc.

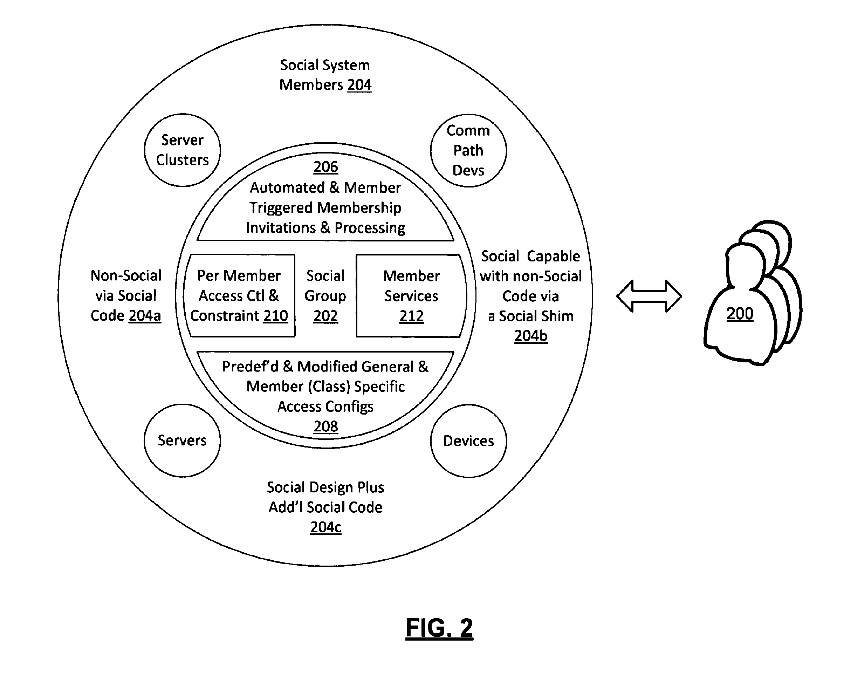

**FIG. 2** illustrates an embodiment of a social group 202 comprising a variety of members in accordance with the present invention. In this embodiment, membership in the social group 202 includes a variety of novel social system members 204 functioning in various capacities within the social group 202. As will be understood, certain of the social system members 204 may support direct or indirect associations between the social group 202 and human members/non-members and users 200.

In the illustrated embodiment, social system members (or nodes) 204 include one or more local or remote servers and server clusters that provide a support infrastructure for social group functionality and member operations (routing, data storage, services, etc.). Communications within the social group and with non-members may occur via dedicated or multi-function communication path devices.

Social system members 204 further include devices configured to operate as nodes within the social group 202. Social functionality in such devices and other social system members 204 can be implemented through various means. For example, a device may have integral hardware/firmware/software to support social group access and member operations. Alternatively, a general purpose device 204a may include social code that enables participation in the social group 202. In a further embodiment, a device 204b designed to include social functionality may participate in the social group 202 through a combination of non-social code and a social shim layer or driver wrapper. In yet another embodiment, a member device 204c having a social design may utilize additional social code, including code specific to a social group 202.

Participation in the social group 202 is supported through functionality that includes automated and member-triggered membership invitations and processing (membership management) 206. More particularly, membership management 206 may function to invite prospective members to participate in the social group 202 through automatic, automated and member-triggered processes. For example, membership management 206 might be configured by a human user 200 to establish a social group 202 by automatically inviting/accepting social system members having certain characteristics (such as devices owned or controlled by the user or acquaintances of the user).

Processing of accepted invitations and unsolicited requests to join the social group 202 may be conditioned upon input or authorization from an existing social system member(s) 204 or human user(s) 200 (e.g., through a user interface). Similarly, membership management 206 may be configured to generate automated suggestions regarding which prospective members receive an invitation. Various other approaches, such as those described herein, can be used to establish membership in accordance with the invention.

Access to and visibility of resources of a social group 202, including services and data, may be managed through general and member class-specific access configurations 208. For example, if membership in the social group 202 includes family members and associated devices, a uniform access configuration (or separate device and human configurations) could be applied across the class in an automatic or automated manner. In other embodiments, access control and constraints 210 are imposed on a per-member basis. Further details of access control and constraint in accordance with various embodiments of the invention are described below.

The social group 202 may offer a wide variety of member services 212, including both internal and external services accessible by social system members 204. By way of example, the social group 202 may offer email or other communication services between full members and/or authorized guest members and visitors. As with other resources of the social group 202, access control and constraints on member services 212 may be applied to individual members or classes of members.

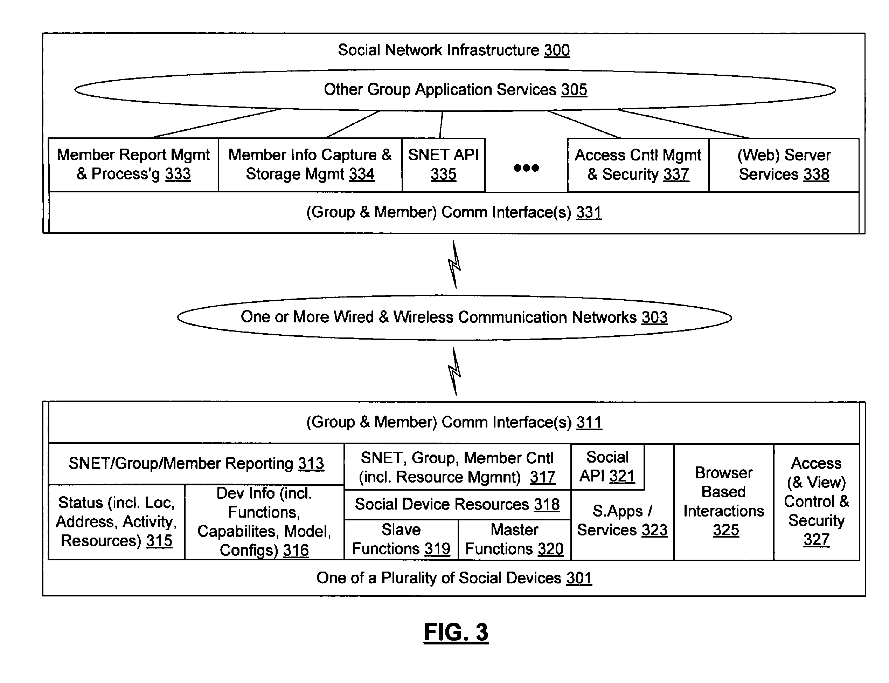

**FIG. 3** is a functional block diagram illustrating a social network (SNET) infrastructure 300 and (member) social device(s) 301 in accordance with an embodiment of the invention. Communications between the social network infrastructure 300 social device(s) 301 and other SNET members may occur over one or more wired and wireless communication networks 303. The SNET infrastructure 300 and social device(s) 300 are coupled to the communication networks 303 by communication interface(s) 331 and 311, respectively, either of which may support communications with individual SNET members, groups of SNET members, or classes of SNET members.

The SNET infrastructure 301 of the illustrated embodiment includes a number of functions and resources to support formation and maintenance of a SNET having social device members. In particular, member report management and processing 333 receives information from SNET/group/member reporting functions 313 in associated social devices 300. Such information may include, for example, status data 315 regarding the location, address and activities of a social device 300 and/or device user.

In addition, the social device 300 may provide device information 316 indicating, for example, device functions and social capabilities, device model number(s), device configurations, software versions, attached peripherals and downstream (social) devices, device resources and usage, etc. Device information 316 relating to available resources and current resource usage may be utilized by the SNET infrastructure 301 for purposes of SNET resource management, including dynamic resource allocation and arbitration.

In various embodiments, the social device 300 may have an obligation to gather, store and/or report device status/information 315/316 at different times. For example, reporting may be required upon affiliation or docking with a SNET, on a periodic basis, and/or during operational engagements with other intra- and inter-SNET resources and devices (including upstream and downstream devices).

Referring again to the SNET infrastructure 301, additional functionality and resources include, without limitation: SNET member information capture and storage management 334; a SNET application programming interface (API) 335 that allows SNET associated software components to communicate with each other; access control management and security 337 for maintaining the integrity of the SNET and affiliated data/resources; and (Web) server services 338. The social network infrastructure 301 further comprises other group application services 305 corresponding to the foregoing, as well as additional services such as those described herein. In one exemplary embodiment, the SNET infrastructure 301 might determine (e.g., by means of device information 316) the category and nature of a social device 300 wishing to participate in a SNET. As necessary, functionality in the SNET infrastructure 301 could then direct or trigger installation of appropriate application software and underlying drivers in the social device 300. Such operations might be performed with minimal involvement from inherent functions of the social device 300.

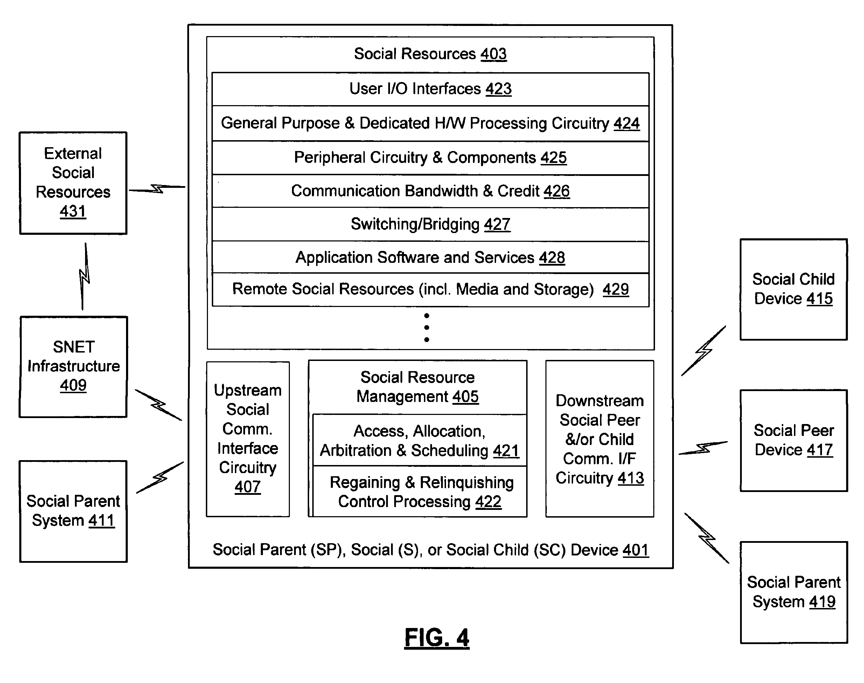

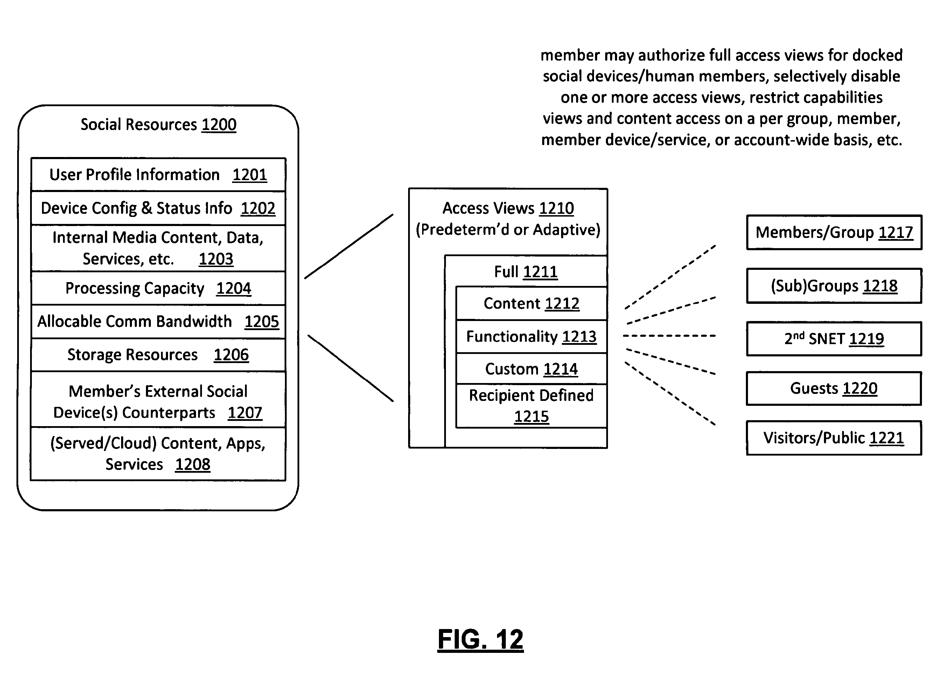

In the illustrated embodiment, the social device 300 comprises a number of additional social device resources 318 (including, for example, the social resources described in conjunction with **FIGS. 4** **and** **12****,** as well as device status/information 315/316) and functions and resources to support participation in a social network. More particularly, SNET, SNET and/or member control functions 317 may include slave functions 319, master functions 320, and various combinations thereof. Slave functions 319 include, for example, device (re)configuration, directed resource allocation, managed resource arbitration, bridging operations, etc. Master functions 320 enable the social device 300 to establish, manage, and terminate various interactions between nodes or groups of nodes in a social network, including interactions involving the social device 300 itself.

The social device 300 further includes a social API 321 and browser-based interaction capabilities 325 to support, for example, relevant social applications and services 323 (which might comprise slave and master functions 319 and 320). Access control (including access views provided to other SNET group members) and security 327 layers permit the social device 300 to interface with or establish secure SNET groups/circles and control access to internal and external SNET resources as described more fully below.

It is noted that numerous of the functional building blocks of the embodiment of the invention illustrated by **FIG. 3** may be incorporated, in whole or part, in one or more (application specific) integrated circuit devices. For example, an integrated circuit device may comprise a member reporting module to provide member reporting functionality (including communication of device status and device characteristics), device control capabilities, master/slave functions, security and access control modules, etc. Such an integrated circuit device may also include onboard processing capabilities and/or interface with a processor device. Alternatively, several of the functions described above may be incorporated, in whole or part, into an operating system and/or software loaded above an operating system kernel.

Referring now to **FIG. 4****,** a schematic block diagram is shown for a social device 401 operable to support various resource access interactions with other social devices and social systems in accordance with an embodiment of the invention. The social device 401 is configured with a variety of functions that enable it to operate in a social device "hierarchy" comprising social (S) devices, social "parent" (SP) devices and social "child" (SC) devices. For example, a social parent device may enable a docked social child device to access resources of the parent device and/or connect to and interact with (directly or indirectly) with a social network. The social child device may be configured with inherent social capabilities, or gain access to such capabilities from or through an associated parent device. Further, a human SNET member might have associated social child devices, or be served by a social parent device via a user I/O interface (423).

A social device 401 according to various embodiments and applications of the invention may also concurrently or selectively function as a social device, SP device, SC device, or even a "grandparent" device that supports (e.g., in a multi-hop environment) a parent device in a SNET group. Dynamic and static hierarchical associations between SP and SC devices may be established in a selective, automatic or automated manner. Further, a social device 401 may take many forms including, without limitation, a smartphone, personal computer, server, tablet device, access point, gateway, network switch/hub, bridging device, set top box, or other device enabled with social capabilities.

In the illustrated embodiment, the social device 401 is communicatively coupled to a SNET infrastructure 409 and/or social parent system 411 via upstream social communication interface circuitry 407. Likewise, downstream social peer and/or child communication interface circuitry 413 enables coupling with a social child device 415, social peer device 417 and/or social parent system (device) 419. Social resources of both upstream and downstream devices may be accessible to one another via the social device 401.

The social device 401 of this embodiment includes social resources 403 that, along with external SNET resources, are managed by a social resource management module 405 and accessible to at least one other SNET group member. Specific social resources 403 may include user I/O interfaces 423, general purpose and dedicated hardware processing circuitry 424, peripheral circuitry and components 425 (which may or may not have social capabilities), communication bandwidth and credit determination functionality 426, switching/bridging functions 427, application software and services 428, remote social resources 429 of the SNET group, external social resources 431 controlled by the social device 401, etc. The external social resources 431 may comprise, for example, an external media/digital library, or content from one or more of cable, satellite and/or terrestrial televisions systems.

Among other functions, the social resource management module 405 comprises access, allocation, arbitration and scheduling functionality 421, as well as the functionality for establishing, regaining and relinquishing control processing operations 422, including operations involving access to social resources 403. It is noted that counterpart social resource management functionality may be present in the SNET infrastructure 409 and/or other SNET nodes.

In one exemplary embodiment wherein the social device 401 comprises a switching bridge, bandwidth capacity may be dynamically allocated by access, allocation, arbitration, and scheduling functionality 421. Access to bandwidth capacity and other resources of the social device 401 might be available only upon request, per access views, or per allocation and arbitration functions, and selectively terminated when excessive bandwidth/resources are consumed or requested.

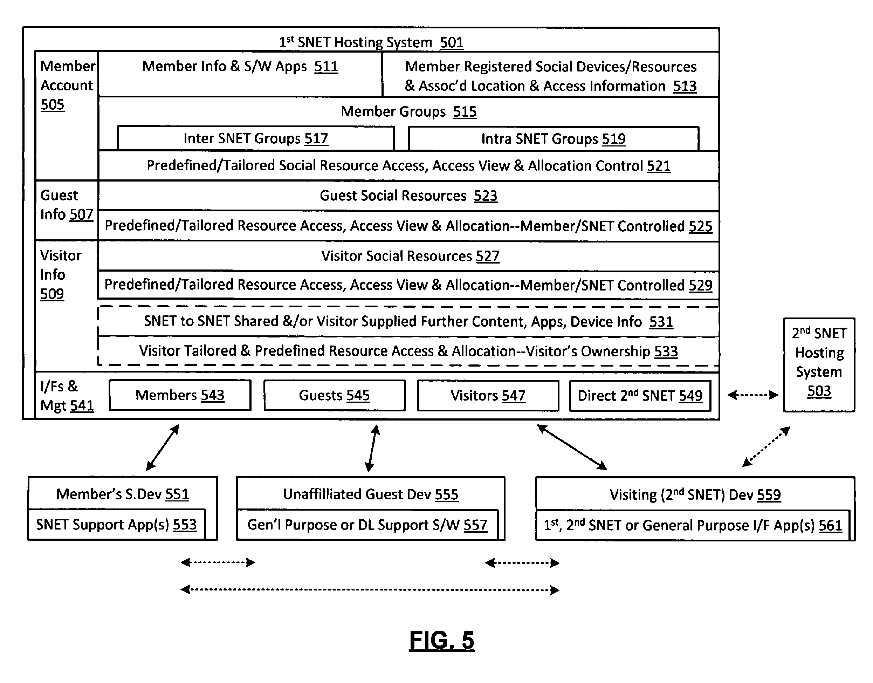

**FIG. 5** is a functional block diagram of a SNET hosting system 501 in accordance with an embodiment of the invention. In addition to other functions, such as enabling interactions with a second SNET hosting system(s) 503, the illustrated SNET hosting system 501 of this embodiment maintains member account information 505, guest or temporary member information 507, and authorized visitor information 509. Such information may be utilized to track available social resources and allow social devices to present an image of themselves and associated capabilities to other members and authorized visitors. The information maintained by the SNET hosting system 501 may be static or dynamic.

Referring to member account 505, member profile data and installed software applications 511, as well as a listing or directory of member registered social devices/resources and associated location and access information 513 is maintained by the SNET hosting system 501. The member account 505 may also indicate a member's participation in social groups 515, including inter-SNET groups 517 and intra-SNET groups 519. In this embodiment of the invention, predefined/tailored social resource access, access view and allocation control functionality 521 for social resources associated with the member is administered by the SNET hosting system 501. Likewise, the SNET hosting system 501 maintains information relating to guest members 507, including a guest member's accessible social resources 523 and associated predefined/tailored resource access, access views and access related information 525. Such information may be controlled by the SNET hosting system 501 and/or one or more members thereof. The SNET hosting system 501 may further maintain information regarding authorized visitors 509, including social resources 527 associated with visiting entities and predefined/tailored access, access view and allocation control provisions which may be regulated by one or more SNET members or resource management functionality of the SNET hosting system 501. Visitor information 509 may also include information regarding resources shared between a visitor SNET and the SNET hosting system 501, and/or visitor controlled content, applications, device info, etc. a visitor made maintain control over tailored and predefined resource access and allocation functionality 533 associated with such resources.

The SNET hosting system 501 of the illustrated embodiment provides interfaces and management functionality 541 for members 543, guest members 545, authorized visitors 547, and direct SNET to SNET interactions 549. For example, a member's social devices 551 (which may include SNET support applications 553) may be accessible by other members via interface and management functionality 541. Likewise, the interface and management functionality 541 may support interactions with unaffiliated guest devices/resources 555, which may include general purpose or downloaded support software 557. Similar interactions with social devices/resources 559 affiliated with authorized visitors 547 of a second SNET may be supported by interface applications 561, including general purpose applications or applications hosted by one or more SNETs. It is noted that access to illustrated social resources and devices may occur in a direct or peer-to-peer manner as configured by the SNET hosting system 501.

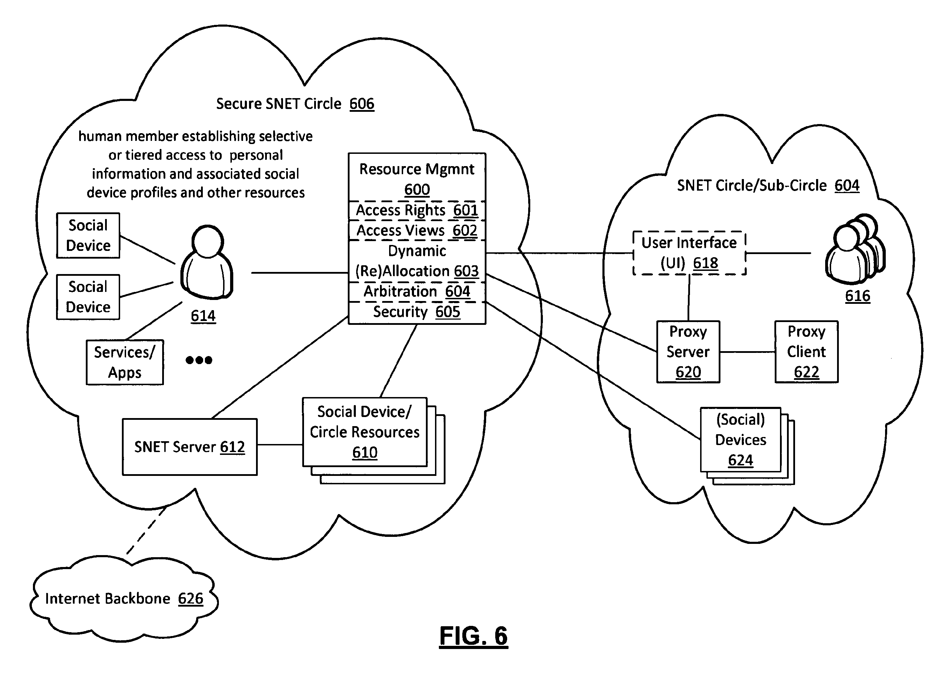

**FIG. 6** is a schematic block diagram illustrating access to social resources of a social network circle 606 in accordance with the present invention. In this embodiment, a member of a social circle controls different access levels to both personal information (which may be included in a user profile) and associated device profiles and capabilities. Such access rights allow the member to establish selective, restricted and/or tiered access rights and views - for other members of the social/group as well as non-members - to all or some of the member's social devices and resources.

In the illustrated embodiment, a member or device of a SNET circle 604/606 (or, alternatively, an unaffiliated entity) accesses social device/circle resources 610 associated with the SNET circle 606 via a resource management node 600. The resource management node 600 comprises access rights 601, access views 602, dynamic (re)allocation functionality 603, arbitration functionality 604, and security functionality 605.

In operation, the access rights 601 and access views 602 control differing access levels and access visibility for a member's personal information, device information, data, processing and storage capabilities, and other social resources. Access rights 601 and access views 602 can be predefined, for example, based on a SNET circle, based on co-member devices, or based on member's own device to device interactions. Such predefinition can be tailored dynamically as needed or as relationships change. Access rights 601 may also be expanded to support temporary interaction with a guest member or visitor device. For example, a visiting member with a smart phone may be permitted to receive/provide media to a social device residing in a "home circle."

In some embodiments, a member of the SNET circle 606 can adjust and modify access rights 601 on an information-by-information basis, device-by-device basis, member-by-member basis, etc. Through access views 602, the member might also present itself in various ways depending on context, location, or use-based considerations. For example, a member icon/avatar may present differing characteristics or capabilities that are context dependent, including work, home or social settings. Allocation and, as necessary, dynamic reallocation of social resources is performed by dynamic (re)allocation functionality 603 and arbitration functionality 604. Access to social resources can be preconditioned on secure access/authentication performed by security functionality 605.

In addition to social device/circle resources 610, the SNET circle 606 might include, for example, a SNET server 612 and one or more human members 614 and affiliated social devices, services, applications, files, web pages, connections and other social resources. As will be appreciated, a human member 614 can establish selective or tiered access to personal information and associated social device profiles and other resources as described above. In certain embodiments, the resource management node 600 may be incorporated in the SNET server 612 or other SNET social device, or administered by a SNET hosting infrastructure, either in a standalone or distributed manner. Further, the SNET server 612 may include a firewall operable to provide secure access and perform basic routing functions.

Access to social device/circle resources 610 by nodes of the SNET circle 604 may occur in a variety of ways, including via a user interface (UI) 618 utilized by one or more humans 616. The UI 618 might comprise a graphical user interface (GUI) or browser that graphically indicates available resources, voice controls, gesture commands, etc. Access to the SNET circle 606 can also be managed by a proxy server 620. The proxy server 620 functions as an intermediary for access requests from proxy clients 622 - including social devices connected to the proxy server 620 via the Internet or other IP-based networks - seeking to communicate with the SNET circle 606. Social devices 624 affiliated with a SNET 604 may have the capacity to interact directly with the SNET circle 606. It is noted that the human members 616, proxy server 614 and social devices 624 may operate independently of a SNET circle/sub-circle. Further, the proxy server 614 may be a distributed or cloud-based entity, or a member of (or incorporated in a member of) either the SNET circle/sub-circle 604 or SNET circle 606.

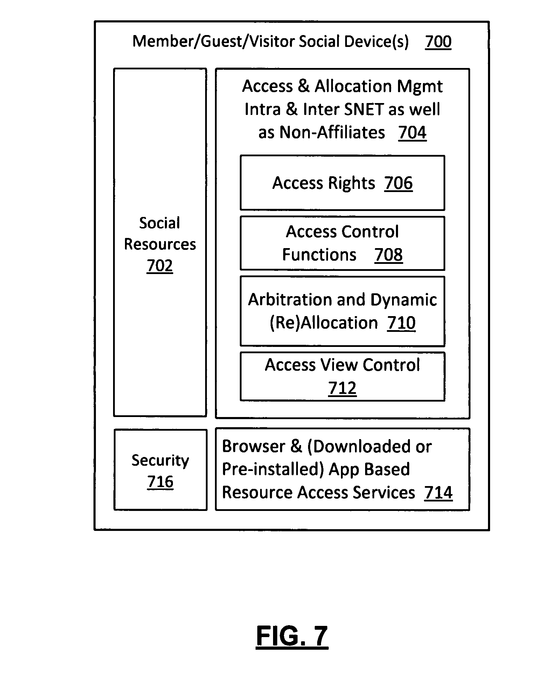

**FIG. 7** is a schematic block diagram of an embodiment of a social device(s) 700 comprising integral social resource access and allocation management functionality in accordance with an embodiment of the present invention. The social device 700 may operate as a member, guest member, and/or and authorized visitor of the SNET. Access to and allocation of social resources 702 of the social device 700 is controlled by (predefined or user-defined) access and allocation management functionality 704, operation of which may apply to intra- and inter-SNET membership nodes, as well as interactions between the social resources 702 and non-affiliated entities. Further, access and allocation management functionality 704 may be distributed between one or more social devices/SNET hosting infrastructures.

The access and allocation management functionality 704 comprises access rights 706, access control functions 708, arbitration and dynamic (re)allocation 710, and access view control 712. Exemplary operation of such functions is described in conjunction with various other Figures herein. Servicing of requests for access to social resources 702 may be carried out, for example, via a browser and/or downloaded or preinstalled applications 714. In certain embodiments, access to social resources 702 is conditioned upon authentication or security operations 716. In addition, various functional blocks of the social device 700 may be incorporated into one or more integrated circuit devices, which may be dedicated to support a primary user and/or shared access operations.

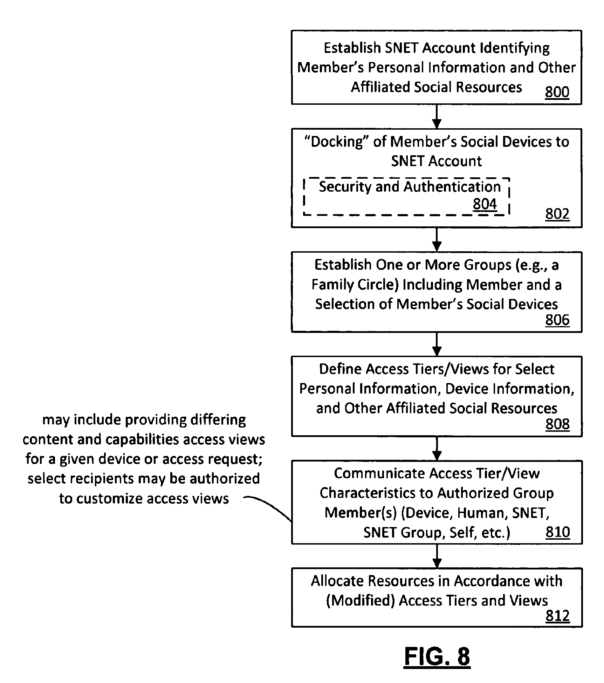

**FIG. 8** is a logic diagram of an embodiment of a method for allocating social resources in accordance with the present invention. In an initial step 800, a SNET member establishes and SNET account that identifies the member's personal information and other affiliated social resources. Next, or contemporaneously, in step 802 the member's social devices are "docked" (e.g., online, through near-field communications (NFC) coupling, or via networked operations) to the SNET account. Such docking may involve security and authentication operations 804.

The method continues in step 806 with the creation of one or more circles or (sub)groups (e.g., a family circle) including the member and a selection of the member's social devices, social devices and SNET circle members having related or specific characteristics and interdependencies, etc. In one embodiment, the member and/or social devices may be added through a drag-and-drop user interface or other means. In step 808, access tiers and views are manually or automatically defined for select personal information, social device information, and other affiliated resources. This step may be conducted in whole or part by means of a (pop-up) table or form that requests tier settings and allows for personal tailoring of same. The member may select a particular circle member (device or human or self) to reveal tier characteristics and allow modification of access rights. In some circumstances, selection of access rights may be based on profile data and other characteristics of a particular device, user or group seeking access to social resources. Further, distinct access rights, including content and capabilities access views, may be assigned to different social device resources or groupings of resources, or to a particular request for access to social resources.

In step 810, access tier/few characteristics are communicated to authorized group members, which may include social devices (including the member's social devices), human members, a SNET or one or more SNET groups. Next, in step 812, social resources are allocated in accordance with the access tiers and views communicated in step 810. Allocation of a social device resource may entail, for example, allocating the resource for dedicated use by a member of the SNET group, either on a persistent or temporary basis, subject to reallocation. Subsequent reallocation may occur, for example, if access to a previously allocated social device resource is requested by a second member (or non-member) having a higher priority or superior access rights to the resource. In certain embodiments of the invention, social resources may be dynamically offered and allocated if/when and to the extent such resources become available. Management of social resource reserves, including termination of related services, may be performed by individual devices, groupings of devices, and/or centralized or distributed SNET processing circuitry and software.

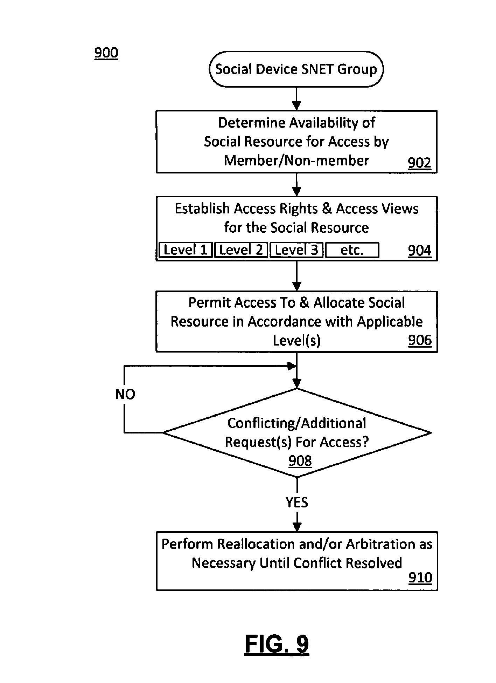

**FIG. 9** is a logic diagram of an embodiment of a method 900 for establishing tiered views of and access to social resources of a social device SNET group in accordance with the present invention. First, the availability of a social resource for access by members/non-members is determined in step 902. Next, access rights and access views for the social resource are established in step 904. Such access rights and views may provide for levels of access having varying degrees of granularity as contextually appropriate and as determined by one or more SNET nodes having control of the social resource, or as determined by an authorized entity requesting access to the social resource.

Established levels of access rights are then applied to permit access to and allocation of the social resource in step 906. If conflicting, modified or additional requests for access are identified in step 908, reallocation and/or arbitration is performed in step 910 as necessary to address conflicts or otherwise service such requests. In one embodiment wherein a particular device or user requires or requests a relatively large percentage of available resources, access may be denied or restricted, including on a temporary or persistent basis. Alternatively, other capable and available social resources may be employed to resolve such requests. Potential overuse or abusive use of an SNET resource may be detected by SNET monitoring functionality that employs static or dynamic thresholds.

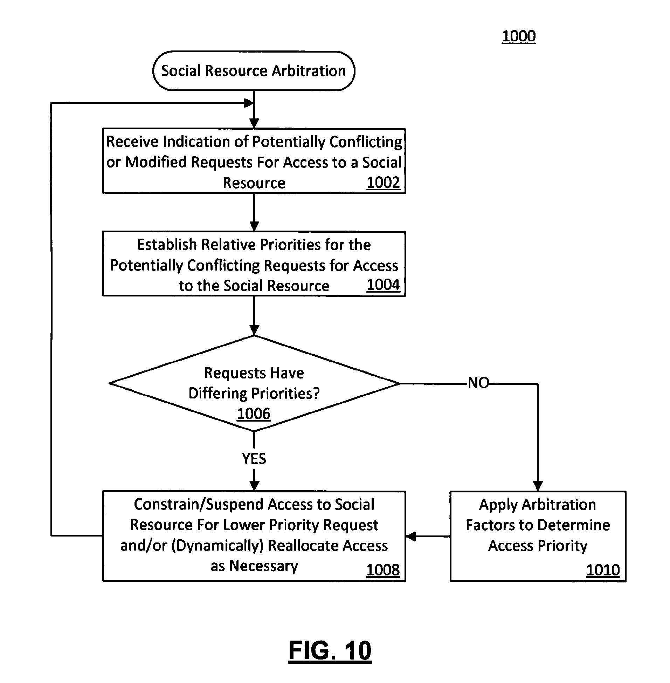

**FIG. 10** is a logic diagram of an embodiment of a method 1000 for arbitrated access to social resources in accordance with the present invention. In certain SNET groups/circles, particularly those comprised of many human and/or device members, more than one member may simultaneously attempt to gain access to another member's (owner's) social device, including periods during which that device is in use by such owner. Such potential conflicts may be addressed by defining access arbitration, including varying levels of access constraints.

Such arbitration operations are triggered in step 1002 after access and allocation (or like) functionality receives or identifies potentially conflicting requests for access - including modified requests and requests for previously allocated resources -to one or more social resources. Next, in step 1004, relative priorities may be established for the potentially conflicting for access to the social resource. If requests for access are determined to have differing priorities in step 1006, access to social resources are constrained or suspended for a lower priority request, and/or access to social resources is dynamically reallocated as necessary in step 1008.

If one or more requests for access are found to have the same or similar priority in step 106, arbitration factors are applied in step 1010 to determine access priority and resolve potential conflicts. It is noted that the steps of the illustrated embodiment may be implemented in a variety of ways, and in some embodiments it may not be necessary to affirmatively establish relative priorities in order to address conflict situations or apply arbitration factors. As described in conjunction with the following Figure, arbitration in accordance with the invention may employ one or more access constraint techniques including, without limitation, use of one or more of the following: full or partial access; first-come-first-served access (followed by a switch to a second tier of access constraint, such as a time allocation approach); simultaneous access support; waiting queues for access order and access QoS; read only or read-write access; DRM-like play once; storage/processing allocations per member/device; pre-allocated/reserved or priority functionality access for certain members and/or member devices (may be profile-based); usage logging and tracking based access, including per device/per member usage caps or restrictions; and time-shared and simultaneous usage modes. For example, in a social device offering multiprocessor-type capabilities as a shared resource, the user or owner of the device may retain priority usage rights for all or part of the processing capabilities, while offering unused capacity to low priority requests including distributed or peer-to-peer computing activities such as the search for extraterrestrial intelligence (SETI).

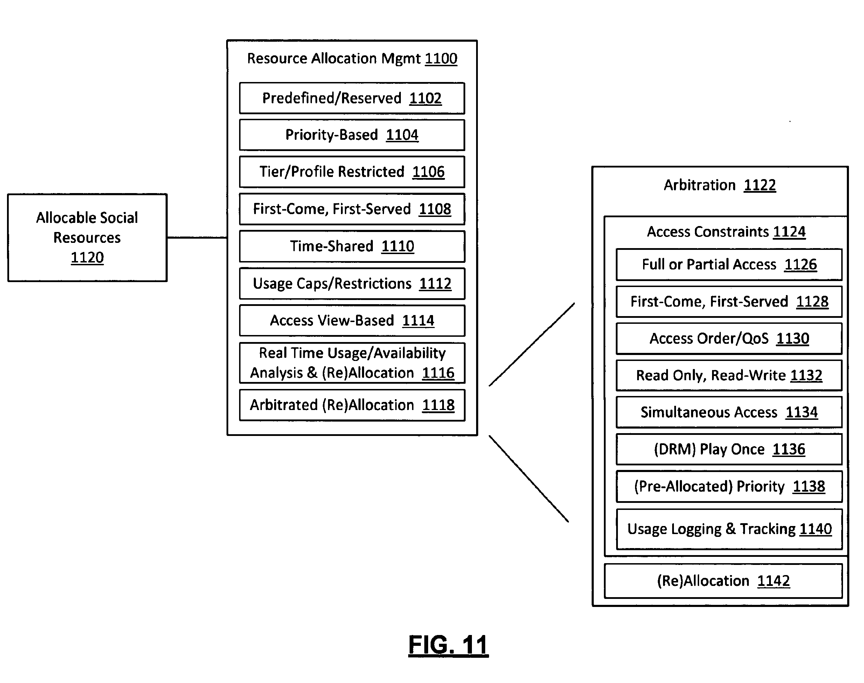

**FIG. 11** is a schematic block diagram illustrating social resource allocation and arbitration functionality in accordance with the present invention. In this embodiment, resource allocation management hardware/software 1100 functions to provide varying levels of access to associated allocable social resources 1120. Resource allocation management 1100 - including termination of access and related services - may be performed by integral functionality in a social device, a grouping of social devices, a node(s) in a SNET hosting system, downloadable or preinstalled applications, by centralized and/or distributed SNET processing circuitry and software which may involve resources in further SNETs and/or unaffiliated devices, etc.

Access rights (including tiered access) to social resources may be applied at varying levels of granularity, including on a group-by-group basis, function-by-function basis, resource-by resource basis, and priority-by-priority basis. Further, particular SNET nodes may have default access rights which could be dependent on a particular mode of operation. For example, a social device might have default access rights applied upon power-up or activation, wherein the device might have either relatively restricted or full access. Such access rights could be applied to a social device via hardware, software or firmware. Alternatively, (default) access allocations could be automatically or manually downloaded from one or more SNET nodes or associated external sources.

Resource allocation management 1100 in accordance with the illustrated embodiment may be conducted using a variety of approaches, including predefined or reserved access 1102 for particular social resources. For example, a social device may include hardware/software for dedicated use by an owner, as well as additional resources that are allocable to support group usage. In such embodiments, an access tier setting may automatically allocate a relatively small (or lowest supported usage level) of a social device's resources for sharing by all human/device members in a given SNET group.

Likewise, an SNET group might use access settings wherein social resources are allocable on a priority basis 1104, on a tiered or profile restricted basis 1106, on first-come-first-served basis 1108, or on a time-shared basis 1110. Usage caps or restrictions 1112 may also be employed. For example, access to a social resource such as media content may be limited to a single usage, following which the accessing social device/member is precluded from further access for a period of time.

In yet another embodiment, social resource access and allocation is restricted to access views 1114 (such as those described in conjunction with **FIG. 12****)** ascribed to a particular social device or SNET member. Social resources may also be offered and (re)allocated in a dynamic manner through real time usage and availability analysis 1116.

As noted above, more than one member and/or inter-SNET node may simultaneously attempt to gain access to another member's (owner's) social device, including periods during which that device is in use by such owner. Access arbitration 1122 schemes (shown generally as arbitrated (re)allocation 1118) may be employed to address potential conflicts. More specifically, varying levels of access constraints 1124 may be employ in for arbitrated access to social resources 1120, including for example: full or partial access 1126; first-come-first-served access 1126; defined (QoS-based) access ordering 1130 that may involve waiting queues; read only or read-write access 1132; simultaneous access 1134 as supported by a particular social resource; (DRM-defined) play once restrictions 1136; pre-allocated/reserved or priority access 1138 for certain members and/or member devices; usage logging and tracking 1140 based access, including per device/per member usage caps/restrictions; etc. As a result of an arbitration operation, one or more social resources may be allocated (or, in the case of previously allocated resources, dynamically reallocated or recaptured) as shown in block 1142. Such reallocation may be performed resource allocation management 1100 and/or access arbitration 1122.

It is noted that resource sharing between social devices may occur directly (peer-to-peer), with SNET group support for setup, tracking and/or logging. Alternatively, such sharing may flow through one or more SNET group social devices/nodes. Similarly, certain social resources 1120 may only be accessed via specific management functionality, while other social resources 1120 might be accessed in multiple ways.

In one embodiment, a device may comprise hardware (e.g., functional blocks in a system-on-a-chip (SoC) dedicated for primary user and other hardware supporting shared access). For example, a set-top box might have integrated support for smart/credit card payment operations and related NFC functions operable within a SNET group to support purchasing transactions via group interactions.

In other embodiments, social resource allocation and reallocation may involve an examination of actual resource usage, as well as the relative priority of such usage. For example, if a social resource is being utilized for authorized network attached storage (NAS) operations, such operations may be suspended in favor of a media delivery request involving the same social resource. In another example, a travelling SNET member may desire to deliver data (e.g., video or itinerary data) to a family SNET group through a social communication device. During delivery, if the SNET member receives an unrelated call or communication, further data delivery to the family SNET group is paused or throttled pending completion of the call.

Similarly, resource allocation and arbitration functionality may be utilized to selectively terminate previously granted access to a social resource following detection of excessive resource consumption (such as communication bandwidth) or pending requests that, if granted, would result in excessive resource consumption. Such policing of social resource consumption may be utilized, for example, for purposes of load balancing, prevention of denial of service and other malicious attacks, etc.

For a given SNET group, it is further contemplated that a SNET member or node ("user") controlling social resources may wish to allocate such resources in an "anonymous" manner, where a particular co-member cannot determine how it is being treated in relation to other SNET group members. For example, a user may desire to share a plurality of associated devices and resources with a first member, but only offer a single device with constrained resources to a second member in the same SNET group. Likewise, a user may wish to withhold from other members the model numbers and other information relating to the user's social devices. Conversely, a co-member may not care about certain device characteristics or capabilities and, as authorized, may eschew or refuse communication of such information

Referring more specifically to **FIG. 12****,** a schematic block diagram is shown in which various access views are established for social device resources 1200 in accordance with an embodiment of the present invention. In addition to other social resources described herein, and without limitation, the social resources 1200 might include social device user profile information 1201 pertaining to an associated SNET group and member devices, social device configuration and status information 1202, internal social media content (e.g., a virtual library containing downloaded books which may be checked out subject to usurpation by an owner), data and services 1203, social device processing capacity 1204, allocable communication bandwidth 1205, storage resources accessible 1206 accessible via a social device, a member's external social device(s) counterparts 1207, and served or cloud-based content, applications and services 1208. User profile information 1201 may include information beyond identification information, including, for example, media consumption history (for applying digital rights management schemes), a list of Web addresses accessed by the user or user's social devices, user location, parental control restrictions, etc.

In the illustrated embodiment, a SNET member may establish device, content and/or capabilities access views 1210 for allocable social resources 1200. The access views 1210 are provided to SNET members (including docked social devices) and authorized non-members and visitors, and may be predetermined or adaptive based on social resource availability and usage.

More particularly, the user or other social resource control node may establish full access views 1211 or various subsets thereof, including without limitation content-only views 1212, functionality views 1213, and custom or targeted views 1214. In addition, recipient defined access views 1215 may be provided to allow a recipient to modify or selectively restrict viewable social resources 1200. A user may also selectively provide or disable one or more of the access views 1210 (e.g., to restrict content access or offered capabilities) to a group/member 1217, subgroup 1218, SNET 1219, guest 1220, visitor (including the general public) 1221 in order to establish a desired degree of anonymity or restricted access. For example, within a SNET group, a member may be granted full access to another member's social device, including make, model and capability information. For another member's device, only media content or an index of available media content may be visible. Such media content may be subject to source quality limitations (e.g., a 720p video stream ceiling) that can be static or dynamically adjusted depending, for example, on device capabilities and other available SNET resources.

As a general construct (but without limitation), one SNET member or member social device is unable to determine the rights of other members - only the access privileges currently enjoyed by the SNET member/device itself, which as noted may have predefined restrictions and real time, dynamic constraints based on concurrent or previously established and ongoing usage. Member social devices may also join SNET circles without the owning member's participation, but in a manner that obscures the identity of the owning member. For example, a member may want to expose processing resources for distributed or peer-to-peer computing activities, but create anonymity as to the member and associated computing device make and model. To do so, the member might merely dock a social computer into a "SETI" group. Associated with such docking, a member may restrict access to a capabilities access view. Such a view might effectively limit operation of and access to the social computer to otherwise idle periods, with operation commencing following a specified time period after an idle state entered, and terminated upon exiting idle state. Available processor capability could also be limited (e.g., 10% of available processing capability) for such activities. In another embodiment, a user might join (automatically or based on an invitation) a broadcast TV rating service which provides for docking of a television, set-top box (STB) or the like in an anonymous channel usage snooping mode that does not reveal device model numbers or other information about the user or the users family beyond, for example, head count, gender, and age.

Anonymity for social resources of an SNET group may take various forms, including concealment of: actual data/content or source information; device information (e.g., model numbers, etc.); full social resource access capabilities; etc. For example, media serving devices could be represented only by content view listings that obscure actual device hardware identification information. Digital rights management (DRM) functionality may also be supported as necessary.

In addition, anonymous secure access may be established, with rights management control, on a SNET-by-SNET, circle-by-circle, human-by-human, and/or device-by-device basis. Restricted content views and device views may entail limited source access. If a particular SNET extends into a work or home environment (including a user's devices, phones, etc.), for example, a mechanism may be employed to fully control access and termination of access, the mechanism triggered by a variety of means that may include the press of a button or user interface menu selection. The user's workplace staff may have permissive access to the user's company-utilized resources (which might include social devices within a home) via a "work" circle.

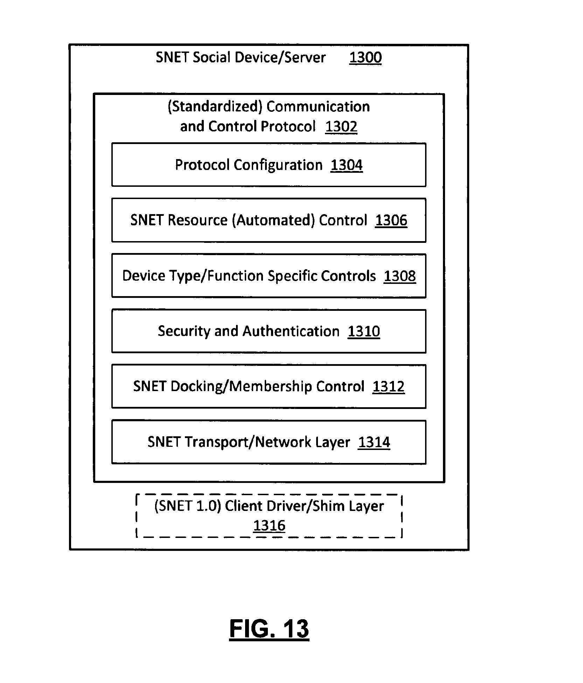

**FIG. 13** is a schematic block diagram of a social device/server 1300 utilizing a communication and control protocol 1302 that enables various SNET resource and control operations in accordance with the present invention. In the illustrated embodiment, the communication and control protocol 1302 comprises protocol configuration 1304, SNET resource (automated) control features 1306, device type/function specific controls 1308, security and authentication features 1310, SNET docking/membership control 1312, and a SNET transport/network layer 1314. Various packetization and encapsulation techniques may be utilized for communicating and receiving control signals and data.

In one embodiment, the social device/server 1300 includes a shim layer or client driver 1316 that enables communications with a central SNET management node and/or SNET members and other compatible devices, including social devices that may not fully support a SNET group communication protocol. The shim layer or client driver 1316 may be installed through a SNET node or local storage, or downloaded from a manufacturer website or cloud-based resource. Such installation may occur automatically upon power up or activation of the social device/ server 1300 or as directed by other SNET nodes.

Management of and access to SNET resources utilizing the communication and control protocol 1302 may be performed by a central management node of a SNET group or SNET hosting infrastructure. The central management node may include integrated artificial intelligence and/or present itself through a "persona" or "avatar". In addition, distributed and delegated control mechanisms, including ad hoc or remote operations that span one or more SNETs, permit one member to interact with their own or another member's social devices via an SNET or SNET defined pathways.

In one embodiment of the invention, a standardized version of communication and control protocol 1302 - referred to herein as a "SNET 1.0" standard for sake of brevity - is employed to facilitate such SNET interactions (and possibly obviate the need for a shim layer in compliant social devices having defined device type characteristics). Various control operations according to an SNET 1.0 standard may include automated and ad hoc SNET group association, as well as support functions such as automated SNET resource offerings, automated device registration and configuration, upgrade and update maintenance, device-to-device communication session management, tunneling/encapsulation functions, proxy services, social resource allocation, etc. For example, through docking of an affiliated social device in a SNET group, a member may desire to access and control their own remote docked devices, as well as remote docked devices of other members, either directly or via a further user device. In this embodiment of the invention, such interaction may be facilitated through a SNET 1.0 compliant approach.

SNET 1.0 compliant devices may be designated as "SNET 1.0 Certified", for example, and provide both system-on-a-chip ("SoC")/hardware and software support peculiar to a particular device family. By way of example, a SNET 1.0 Certified NAS might have storage related, defined control capabilities that include default access tier definitions as described herein, security and DRM features, etc. Such control capabilities differ from, for example, a SNET 1.0 Certified STB (which might have multiple tuners/pipelines for delivering streaming video with certain tuners/pipelines reserved for the device owner according to a setup procedure). Social devices may be configured, manually or through factory-staged settings and security, to delegate membership control to a SNET (1.0) group/server for further applications such as those described below.

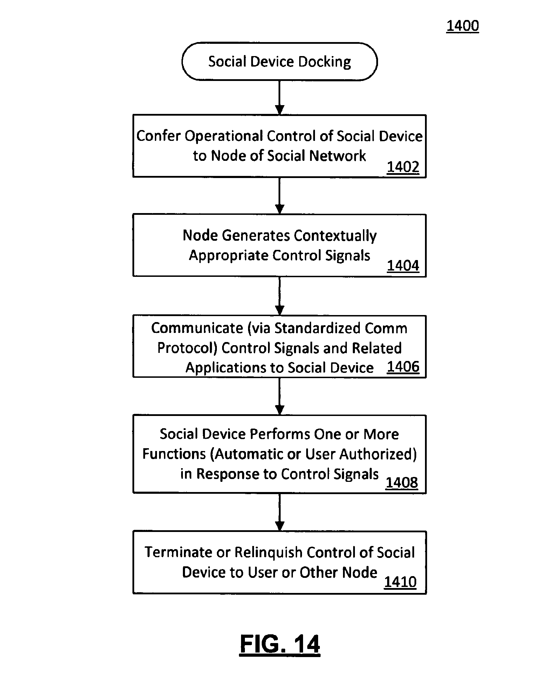

Referring now to **FIG. 14****,** a logic diagram of an embodiment of a method 1400 for controlling operation of a social device in accordance with the present invention is shown. Upon activating or docking a social device, account information is automatically (or via a setup-up prompt) provided to the SNET group. Next, in step 1402, operational control of the social device is conferred to a node of the SNET group. This node then generates contextually appropriate control signals as shown in step 1404.

In step 1406, the control signals and contextually-related applications are communicated to the social device (via a standardized communication protocol). In response to the control signals, the social device performs one or more functions, either automatically or as authorized by a user, in step 1408. In subsequent step 1410, control of the social device is terminated or relinquished to a user or other SNET node.
In certain embodiments, some social devices may support only one member interaction at a time, with or without simultaneously supporting the underlying owner/member. Other devices may support many multiple members (devices/humans) as well as having dedicated functionality reserved for an owner. A standardized or manufacturer proprietary approach to control and certification marking may account for such variations in SNET device capabilities. Monitoring and snooping of content (e.g., for purposes of protecting copyright owners) and like functionality could also be accomplished through compliance with a standardized protocol.

In a further embodiment of a SNET/SNET group according to the invention is illustrated, an authorized guest member may control the social devices of another via one of the guest's own social devices, or vice versa. Such control can be established in advance (at the factory) or managed in real time via guest interaction. Utilization of certain control features, such as features allowing content to be driven and played on another's device, may be restricted, for example, to members or friends of a particular SNET group that allows content or process snooping.

By way of illustration, a social camera might capture and store home video, post a link thereto via a family SNET, and then enter a low power/sleep mode. A family circle member residing in another country, for example, could then activate an associated social television that participates in the family circle. Next, a channel entry for the posted media may become visible and trigger video playback. In turn, a command is triggered to wake up and stream video content to the social television.

Authorized control of another's social device enables a variety of other applications. By way of example, a member of a "travel" circle might receive detailed hotel information (including confirmations, rates, amenities, restaurant recommendations, nearby attractions, etc.) through an application/social device associated with the travel group or hotel. In another example, a device user joins a church social circle and docks one or more of his/her social communication devices (e.g., a smart phone). In conjunction therewith, the church docks a social control application interface or social application (managed, for example, by a priest/pastor) into the circle. Thereafter, via automatic in-range determinations (GPS tracking, WiFi/NFC presence, etc.), the social control application/interface delivers context appropriate control signals to the user's social device(s). Other control signals may be provided to automatically collect donations or automatically deliver a prompt for same, automatically deliver a hymnal, provide a worship service agenda, etc. For example, the user phone may be instructed to enter into emergency only and do-not-disturb (e.g., vibrate only) modes of operation. Similarly, social automated device control may be used to configure, program or collect status information for appliance devices, (e.g., a washing machine or thermostat). A user may designate control jurisdiction and/or data collection capabilities to a friend, circle member(s) or application interface/application.

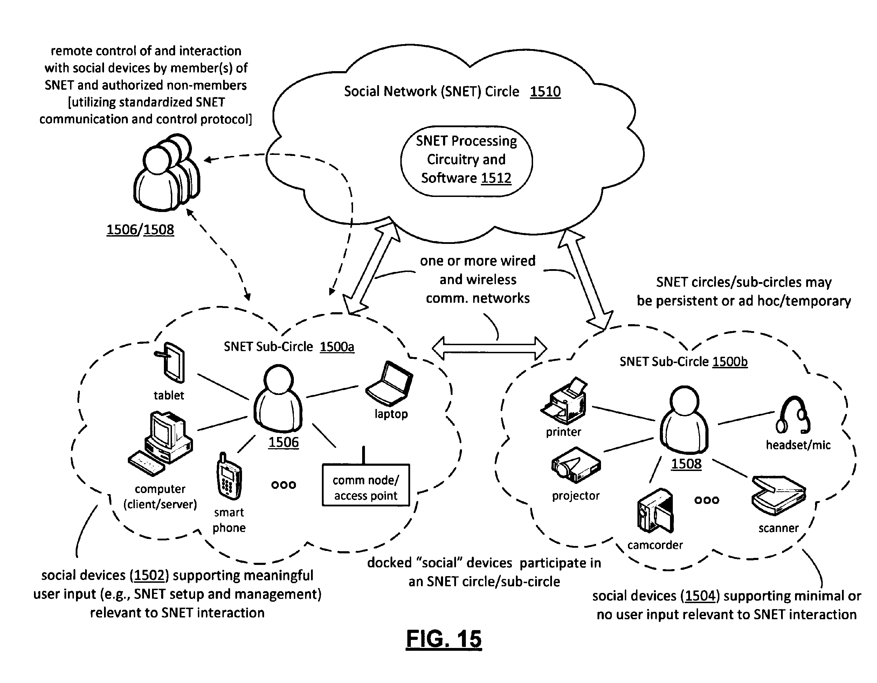

**FIG. 15** illustrates social device membership and accessibility in social network circles/sub-circles in accordance with the invention. In the illustrated embodiment, membership in a SNET circle 1510 may be extended to encompass public and private social devices and equipment. For example, in a SNET circle 1510 that includes human members 1506/1508, each human member may have a respective personal SNET sub-circle 1500(a)/1500(b) of associated or docked social devices 1506/1508 capable of independent or aggregated participation in the SNET circle 1510. The SNET sub-circle may be locally or remotely accessible by a human member 1506/1508 and/or other SNET circle/sub-circle members through various means, such as clicking on an icon or tag associated with the human member/personal sub-circle.

Although SNET sub-circles 1500(a) and 1500(b) are illustrated as separate sub-circles, such sub-circles may instead comprise a single SNET circle or sub-circle, or any number of additional SNET circles and/or sub-circles, each of which may include various combinations of social devices 1502/1504. Further, SNET processing circuitry and software 1512 of the illustrated embodiment manages formation and operation of the SNET circle 1510. The SNET processing circuitry and software 1512 may be incorporated in a standalone server, social devices, and/or cloud-based resources. The SNET circle 1510 may be persistent or of limited duration, and include ad hoc and/or static associations.

Exemplary social devices 1502/1504 may be broadly categorized as either (i) social devices 1502 that include a user or SNET circle interface sufficient to provide meaningful input to SNET interaction and (ii) social devices 1504 that support minimal or no user input relevant to SNET interaction. More particularly and without limitation, the first category may include computers, tablet devices, IPTVs, IPTV set top boxes, smart phones, servers, laptops, cloudbooks, network attached storage devices, gaming consoles, media players/sources, communication nodes (access points, routers, switches, gateways, etc.), user interface devices, power line communication (PLC) devices, etc. Such social devices may receive user input for SNET setup and management. The second category may include, again without limitation, printers, projectors, cameras and camcorders, scanners, speakers, headsets, smoke detectors, alarm systems, video cameras, mice, etc. In general, dockable social devices include any electronic device that could be operably coupled to or docked in a SNET circle/sub-circle via wired or wireless pathways to participate as a SNET member.

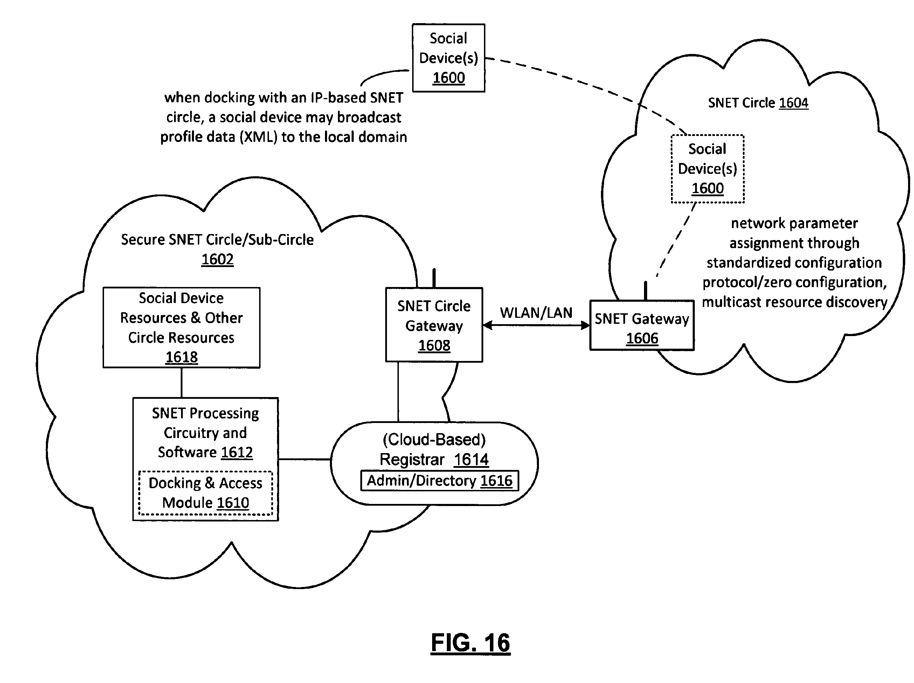

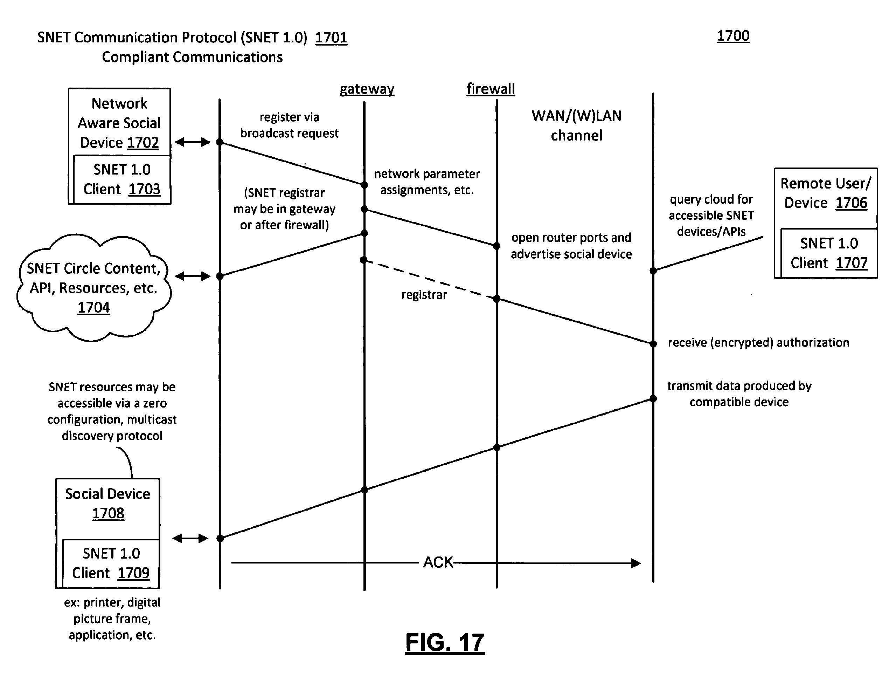

As will be appreciated, by docking social devices, members of a SNET circle 1510 may gain full or partial remote control and interaction such devices via an authorized member SNET account. For example, family members authorized to participate in a "family" SNET circle may remotely access docked social devices via one or more associated SNET accounts. Exemplary methods for docking and accessing social devices are described more fully below, e.g., in conjunction with **FIGS. 16** **and** **17****.**

**FIG. 16** is a schematic block diagram illustrating remote access to social resources of a social network circle/sub-circle in accordance with the present invention. In the illustrated embodiment, a social device 1600 may indicate a desire to associate, dock, access social device resources and other circle resources 1618, or otherwise communicate with a (secure) SNET circle/sub-circle 1602. The social device 1600 device can be autonomous and independent or, alternatively, a participant in a second SNET circle 1604 or other network serviced by the SNET gateway 1606.

In one embodiment, either the SNET gateway 1606 or SNET circle gateway 1608 functions as a proxy for the social device 1600. Proxy functionality within the SNET gateway 1606 may be provided by a software application or a computer system (server) that functions as an intermediary for requests from clients (including connected social devices) seeking resources from other servers or gateways such as SNET gateway 1608. Such resources might include files, services, web pages, connections, profiling information and other available social device resources and other circle resources 1618.

The SNET gateway 1606 may evaluate requests from social devices according to various filtering rules. For example, the SNET gateway 1606 might filter traffic by IP address or protocol. Once a request from the social device 1600 validated (if necessary), the SNET gateway 1606 connects to the SNET circle gateway 1608 over a WLAN/LAN or other communication path and requests access to resources of the SNET circle/sub-circle 1602 on behalf of the social device 1600.

Membership in the SNET circle/sub-circle 1602 is established through a docking module 1610 of SNET processing circuitry and software 1612, which may support one or more device discovery and configuration protocols, including standardized protocols. When circle membership is restricted, a local or cloud-based registrar 1614 can be employed to provide authentication. The registrar 1614 of the illustrated embodiment may utilize an administrator, or a directory service 1616 such as a Lightweight Directory Access Protocol (LDAP)-based directory server that stores attribute data. LDAP is a well-known application protocol for querying and modifying items in directory service. When docking with an IP-based SNET circle, a social device may broadcast profile data to the local domain using a textual data format such as Extensible Markup Language (XML).

**FIG. 17** is a state diagram 1700 depicting social device docking and remote resource access in accordance with the present invention. The diagram 1700 illustrates one embodiment of a method for (1) docking of a social device with a SNET circle and (2) granting a non-member entity access to various resources of a SNET circle. Various methodologies and protocols may be employed to achieve the foregoing operations without departing from the scope of the invention.

Referring first to the network aware social device 1702, exemplary steps are shown for docking or otherwise associating with a SNET circle 1704. In this embodiment, the social device 1702 broadcasts a request to register with or access a SNET circle. The request may occur as part of initiation or power-up of the social device 1702, on a proximity or ad hoc basis, or other trigger event. Further, the social device 1702 and SNET circle may employ a standardized social networking and control protocol client 1703 (integrated or installed).

The registration request may be received by at least one gateway device. The gateway functions to configure the social device 1702 such that it can communicate with other hosts. In an IP-based network, typical configuration information might include an IP address and default route and routing prefix. The gateway may be a standalone device, multi-function computing device, etc., and can operate in an ad hoc manner or be persistent.

In one illustrative embodiment, the network configuration protocol utilized by the gateway may be the Dynamic Host Configuration Protocol (DHCP) and related standards, promulgated and maintained by the Internet Engineering Task Force (IETF), or similar protocol that automates network-parameter assignment to network aware social devices 1702. In addition to eliminating the need for manual device configuration, DHCP provides a central database of devices that are connected to the network and eliminates duplicate resource assignments.

Upon a trigger event (e.g., power-up, registration with a SNET circle, etc.), the social device 1702 can transmit configuration/capability information to one or more other devices. Such information may be advertised to specific devices identified by the social device 1702. The configuration/capability information may also be transmitted to any device in a SNET circle, or any device capable of receiving the transmission. A device can, in some embodiments, determine the configuration/capability information of other devices by querying them, individually or as a group.

SNET circle resources may also be accessible via a zero configuration, multi-cast discovery protocol that locates devices, such as printers, and the services offered by those devices on a local network using a multicast discovery protocol and related service records or profiling information. Such a protocol may operate at the application layer, and transmissions of configuration/capability information can be used, for example, to identify and utilize common programming interfaces, protocols, packet formats, and the like between two or more devices. In addition, a bridge or proxy node that communicatively couples two or more devices may utilize a multicast-type discovery and access protocol. In certain embodiments, a bridge or proxy node may communicate or relay queries and advertisements regarding configuration/capability information, and may further operate to process, transcode or modify transmissions relating to configuration/capability information of devices.

Wide area service discovery of SNET circle resources may be enabled through an appropriately configured domain name service (DNS) server or the like, or a multicast-type protocol that performs DNS-like operations. Further, SNET circle resources may be configured to support interoperability guidelines and network protocols, such as Universal Plug and Play (UPnP), that provide uniform mechanisms and restrictions for accessing resources and media over a network.

Depending on the particular implementation, gateway (DHCP server) may utilize various methods to assign and allocate IP addresses. Briefly, a network/SNET circle administrator can assign a range of available IP addresses. Each social device can be configured to request an IP address when joining a SNET circle or during SNET circle initialization. Next, an IP address can be granted using a "lease" approach that includes a configurable time period, thereby enabling the gateway to dynamically reclaim and then reallocate IP addresses that are not renewed (e.g., a social device powers off or otherwise terminates communication with a SNET circle).

Alternatively, the DHCP server may permanently assign an available IP address to a social device. Under this approach (and the "lease" approach), the DHCP server maintains a table of previous IP address assignments, such that it may preferentially assign an IP address that was previously assigned to a requesting social device. In yet another approach, a DHCP server may restrict IP address assignment to devices included in a table with MAC address and IP address pairs.

Once the social device 1702 is configured, the gateway communicates with a firewall to open up communication ports, thereby permitting network transmissions to/from the social device 1702. Registered ports are typically used by networked applications as transitory source ports when contacting servers, but may also identify named services that have been registered by a third party.

In addition to opening ports for devices, the firewall may function to advertise the social device 1702 to local and remote users/devices and services over, for example, a WAN/(W)LAN communication channel. In one embodiment, social device 1702 IP addresses and profiles are communicated to SNET circle members and remote users/devices. In another embodiment, a gateway may function as a proxy (such as described above in conjunction with **FIG. 16****)** for social devices, including legacy devices that might otherwise require human involvement. The firewall may be software-based (e.g., as part of an operating system), or comprise various combinations of software, firmware and/or hardware components. In addition, the gateway may include distributed firewall functionality for connections to SNET circles/sub-circles and remote devices, respectively.

Social device 1702 participation in a SNET circle/sub-circle can be established through a docking module or like functionality in a SNET circle. When SNET circle membership is restricted, a local or cloud-based registrar can be employed to provide authentication services (using a directory service, for example). The registrar may be located in or on either side of the gateway, including after firewall, or it may operate independently of a gateway. Further, the registrar might provide registration functions for both the social device 1702 and/or a remote user/device 1706.

When docking with an IP-based SNET circle, the social device 1702 may broadcast profile data to the local domain using a textual data format such as Extensible Markup Language (XML). Upon successful docking of a new social device 1702, a SNET circle node (e.g., docking module) provides authorized access to SNET circle. It is contemplated that the social device 1702 may simultaneously participate in more than one SNET circle.

Referring to the remote user/device 1706, a process is illustrated for accessing resources in a SNET circle such as a social device 1708. In one embodiment, the remote user/device 1706 and social device 1708 employ embedded SNET circle clients 1707 and 1709, respectively, to establish communications with the social device 1708. In operation, the client queries the cloud, over a WAN/(W)LAN or like communication channel, for accessible SNET devices and APIs. Visibility of other SNET circle devices/resources might be selectively determined by a SNET circle owner or administrator.

Upon detection of the social device 1708 and affiliated SNET circle, access by the user/device 1706 may require a registration process such as that described above. If access is to be granted, the user/device 1706 receives authorization information, which could be encrypted and involve the exchange of encryption keys with a SNET circle or registrar. Access to the SNET social device 1708 might also require a username/password. Prior to or following authentication of the user/device 1706, the SNET circle client can be configured to broadcast profile information relating to the social device 1708.

In one embodiment, after access to the social device 1708 is established, the user/device 1706 transmits data to the social device 1708 for further processing. Such data may be produced by a driver or device that is compatible with the advertised capabilities of the social device 1708.

By way of example, if the social device 1708 is a networked printer, the user/device 1706 can transmit a document to the printer or relevant SNET circle URL for printing. In another embodiment wherein the social device 1708 is a digital picture frame, the user/device 1706 provides an image for display, either automatically or via remote activation (such as a voice command). In yet another exemplary embodiment, the social device 1708 comprises a shared folder that is accessible, for example, by students in a classroom SNET circle. An acknowledge protocol can be utilized to confirm successful communications between the user/device 1706 and social device 1708.

SNET circle resources may be accessible via a zero configuration, multicast discovery protocol that locates devices, such as printers, and the services offered by those devices on a local network using a multicast discovery protocol and related service records or profiling information. Such a protocol may operate at the application layer. Wide area service discovery of SNET circle resources configured in this manner may be enabled through an appropriately configured domain name service (DNS) server. Further, SNET circle resources may be configured to support interoperability guidelines and network protocols, such as Universal Plug and Play (UPnP), that provide uniform mechanisms and restrictions for accessing resources and media over a network.

SNET circle communications in accordance with the invention may utilize a variety of transmission protocols. By way of example, most communication over the Internet is currently performed in accordance with the Transmission Control Protocol (TCP) and User Datagram Protocol (UDP). As is known, TCP typically provides an intermediate level of communication services between, for example, an application program and the Internet Protocol (IP). Port numbers are used to identify end-points for sending and receiving applications on a host (often referred to as "Internet sockets" or "network sockets"). Internet sockets facilitate delivery of incoming data packets to an appropriate application process or thread, as determined by a combination of local and remote (e.g., SNET circle) IP addresses and port numbers. In some embodiments, the Real-time Transport Protocol (RTP) running over UDP may be employed for media streaming applications, real-time multiplayer gaming, voice over IP (VoIP), and like applications that are tolerant of a certain level of packet loss and may not require a dedicated end-to-end-connection.

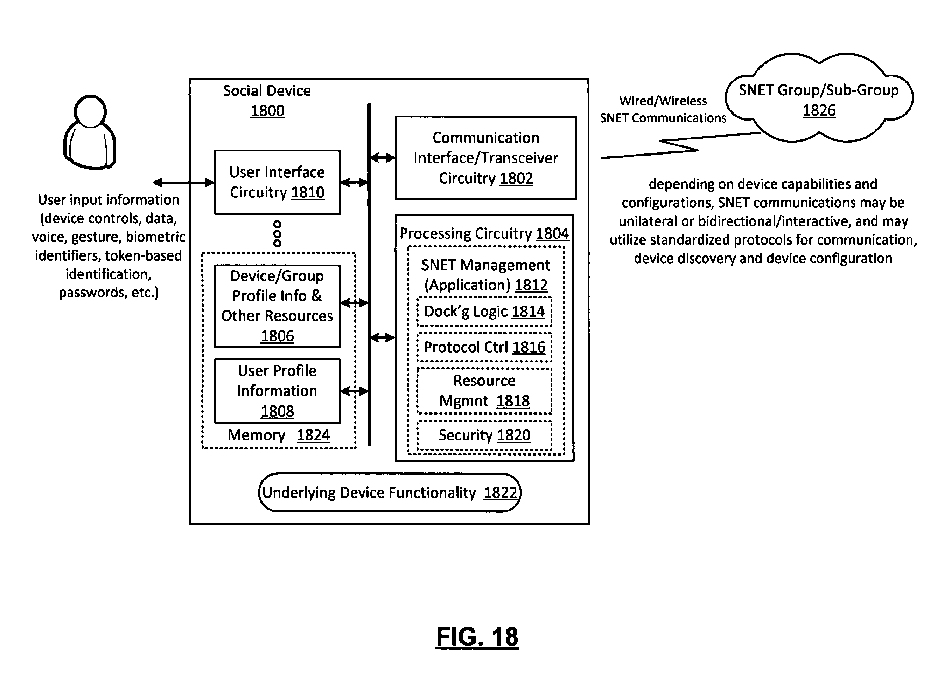

**FIG. 18** is a schematic block diagram of an embodiment of a social device comprising integral functionality operable to support social network circle/sub-circle membership and communications in accordance with the invention. In the illustrated embodiment, a communication interface and transceiver circuitry 1802 is operable to perform wired or wireless communications between the social device 1800 and a SNET group/sub-group 1826 over one or more communication channels. Depending on the capabilities and configuration of the social device 1800, communications with a SNET may be unilateral or bidirectional/interactive, and utilize either a proprietary or standardized communication protocol. Communications may include, for example, device profile information, user and SNET circle profile information, control signals, media content, interactions with hosted service data, user data, relayed information, etc.

The social device 1800 further includes processing circuitry 1804 operable to process and manage communications, services and associations between the device and other entities including members of a SNET group/sub-group 1824, third parties, software agents, etc. More particularly, the processing circuitry 1804 may include, for example, a software management application 1812 comprising one or more of docking logic 1814 (including support for device discovery and configuration protocols such as described below), communication protocol control 1816, resource management 1818, and security/authentication 1820 functionality.

The social device 1800 further may utilize that may take many forms and be maintained in static or dynamic memory 1824. Such profile information enables a social device and/or user to present an image of itself and its capabilities to other members of a SNET. In particular, device/group profile information and other resources 1806 and user profile information 1808 may be utilized in various ways in accordance with the invention to facilitate a variety of social interactions. Depending on the capabilities and requirements of a particular device (and other members of a SNET), a device or user profile may be static or dynamic.

In certain embodiments, the social device 1800 may interact with a user(s) via user interface circuitry 1810. User input to the social device 1800 may include, for example, data entry through a keypad, touchscreen, remote control device, gaming controller, device control buttons, voice or gesture commands, storage device, etc. Authorized access to or control of the social device 1800 can be facilitated through unique biometric identifiers, passwords, token-based identification, trusted authorities or documents such as a driver's license or passport, and like authentication means.

The social device 1800 may perform core or underlying functionality 1820, (e.g., a social appliance, security device, vehicular communication node, etc.). Alternatively, the social device may primarily function as a social networking interface or communication device, or be programmable to perform specific functions within a SNET group/sub-group.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "processing circuit", and/or "processing unit" may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may be, or further include, memory and/or an integrated memory element, which may be a single memory device, a plurality of memory devices, and/or embedded circuitry of another processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributed (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a processing module, a functional block, hardware, and/or software stored on memory for performing one or more functions as may be described herein. Note that, if the module is implemented via hardware, the hardware may operate independently and/or in conjunction software and/or firmware. As used herein, a module may contain one or more sub-modules, each of which may be one or more modules.

While particular combinations of various functions and features of the present invention have been expressly described herein, other combinations of these features and functions are likewise possible. The present invention is not limited by the particular examples disclosed herein and expressly incorporates these other combinations.

## Claims

1. A method for allocating resources in a social network circle having an associated membership including at least one social device, the social device having a social device resource capable of being shared with at least a second member of the social network circle, the method comprising:
establishing access rights for the at least one social device resource;
identifying a request, from the second member of the social network circle, for access to the at least one social device resource; and
in response to the request, permitting access to the at least one social device resource in accordance with the access rights.

2. The method of claim 1, wherein the second member of the social network circle is a human member.

3. The method of claim 1, wherein establishing access rights for the at least one social device resource comprises establishing a plurality of levels of access rights, and wherein permitting access to the at least one social device resource comprises selecting one of the plurality of levels of access rights.

4. The method of claim 3, wherein selecting one of the plurality of levels of access rights is based, at least in part, upon profile information associated with the second member of the social network circle.

5. The method of claim 1, further comprising:
identifying a second request for access to the at least one social device resource by a third member of the social network circle or an authorized non-member of the social network circle;
establishing the relative priority of the first and second requests; and
responding to the relatively lower priority request by permitting constrained access to the social resource.

6. The method of claim 5, wherein constrained access to the at least one social device resource comprises suspension of access pending resolution of the higher priority request for access to the at least one social device resource.

7. The method of claim 1, the social network circle supported by a social network infrastructure having resource management functionality, wherein permitting access to the at least one social device resource is performed by the resource management functionality.

8. The method of claim 1, the at least one social device resource selected from the group consisting of:
social device user profile information;
social device configuration information;
social device status information;
social media content; and
social device data.

9. The method of claim 1, the at least one social device resource selected from the group consisting of:
processing capabilities;
allocable communication bandwidth;
storage resources accessible via the social device;
services; and
attached device resources.

10. The method of claim 1, wherein the access rights are established, at least in part, via a user interface associated with the at least one social device resource.

11. Device circuitry used to interact with a social network system, the social network system hosting a social circle, the device circuitry comprising:
interface circuitry operable to couple with the social network system;
processing circuitry coupled with the interface circuitry to support secure interaction with a social resource associated with the social network system; and
the secure interaction comprising interaction regarding social circle membership and social device resource access rights.

12. The device circuitry of claim 11, the processing circuitry further operable to support sharing of a social resource offered via the social circle, the sharing in accordance with the social device resource access rights.

13. The device circuitry of claim 11, support for sharing of a social resource comprising arbitration of requests for access to the social resource.

14. The device circuitry of claim 11, the social device resource access rights comprising at least a first level of access rights and a second level of access rights.

15. A method for exercising control of a social device docked in a social network circle having at least one human or non-device member, the social device configured to receive and process control signals from other nodes in the social network, the method comprising:
conferring operational control of a resource of the social device to a node of the social network;
generating, by the node of the social network, contextually appropriate control signals relating to the resource of the social device; and
communicating the control signals to the social device, the resource of the social device performing a function in response to the control signals.
